Europäisches Patentamt

European Patent Office

Office européen des brevets

(19)

(11) Numéro de publication : **0 072 336**
**B1**

(12) **FASCICULE DE BREVET EUROPÉEN**

(45) Date de publication du fascicule du brevet :
16.04.86

(51) Int. Cl.⁴ : **A 47 J 39/02**

(21) Numéro de dépôt : **82440022.0**

(22) Date de dépôt : **23.07.82**

(54) **Dispositif de remise en température des aliments disposés sur des plateaux individuels avec régénération intégrée.**

(30) Priorité : 03.08.81 FR 8115315

(43) Date de publication de la demande :
16.02.83 Bulletin 83/07

(45) Mention de la délivrance du brevet :
16.04.86 Bulletin 86/16

(84) Etats contractants désignés :
AT BE CH DE GB IT LI LU NL SE

(56) Documents cités :
FR-A- 2 349 112
FR-A- 2 375 853
US-A- 2 500 219
US-A- 3 590 727
US-A- 3 908 749
US-A- 4 206 343

(73) Titulaire : **R. FRITSCH S.A. Société Anonyme dite:**
**4, rue de la Charente**
**F-68270 Wittenheim (FR)**

(72) Inventeur : **Fritsch, Edgar**
**14, rue des Anémones Richwiller**
**F-68120 Pfastatt (FR)**
Inventeur : **Fritsch, Norbert**
**10, rue de la Rivière**
**F-68390 Sausheim (FR)**

(74) Mandataire : **Aubertin, François**
**Cabinet Lepage & Aubertin Innovations et Presta-**
**tions 4, rue de Haguenau**
**F-67000 Strasbourg (FR)**

Jouve, 18, rue St-Denis, 75001 Paris, France

## Description

L'invention concerne un dispositif de remise en température des aliments disposés sur des plateaux individuels avec régénération intégrée présentant au moins une plaque de diffusion de chaleur pourvue d'une résistance électrique composée, d'une part, d'un réceptacle à au-moins un compartiment dont les faces internes des parois latérales sont pourvues de glissières horizontales et dont le fond est pourvu de deux conducteurs électriques verticaux et, d'autre part, de plateaux individuels pourvus de contacts électriques (voir le US-A-3 908 749).

Dans de nombreuses exploitations de restauration collective et publique et, notamment dans les hôpitaux, cliniques et autres, on utilise, pour les cuisines collectives en liaison froide, un procédé d'acheminement des aliments. Selon ce procédé, les aliments sont cuisinés dans une cuisine centrale puis sont refroidis de 75° Celsius à 3° Celsius à cœur en moins d'une heure. Ce refroidissement est réalisé par l'intermédiaire d'une cellule de réfrigération rapide, soit mécanique, soit cryogénique. Les aliments sont stockés au froid pendant un temps maximum de trois jours puis sont transportés aux divers points de consommation. A ces points de consommation, les aliments sont régénérés et portés à une température de 75° Celsius une heure avant la consommation.

On connaît, par le document FR-A-2 496 436, un autre procédé selon lequel on intercale, aussi bien pour les aliments cuisinés que pour les aliments froids, entre le refroidissement à 3° Celsius et le stockage dans la chambre froide, une phase de mise sous vide des aliments disposés soit dans un chariot à portions collectives ou individuelles, soit dans un bac de dimensions gastronormes à couvercle étanche.

Il s'avère donc nécessaire de remettre en température les aliments. Le but à atteindre est de restituer aux aliments refroidis les calories perdues après la cuisson, tout en leur conservant la même saveur, la même texture, la même valeur nutritionnelle et la même population microbienne qu'ils avaient en fin de préparation culinaire.

A cet effet, on connaît déjà plusieurs dispositifs permettant cette remise en température des aliments. Un de ces dispositifs connus consiste en un four, plus ou moins important suivant le nombre de couverts, utilisant des infrarouges. La remise en température s'effectue en plaçant les assiettes recouvertes de leurs cloches sur les étagères du four. Ce four renferme des tubes émetteurs infrarouges qui se trouvent placés dessus et dessous chaque assiette recouverte de sa cloche. On procède au préchauffage de l'appareil pendant un temps déterminé, puis on introduit le chariot garni. On élève la température intérieure à 180° Celsius et on règle une minuterie en fonction de la nature des aliments à remettre en température. En général, la durée est de huit à quinze minutes pour les plats réfrigérés et de vingt à vingt cinq minutes pour les mets surgelés en barquette. Ce temps écoulé, une sonnerie avertit l'employé qu'il faut retirer le chariot du four.

Toutefois, ce dispositif présente plusieurs inconvénients. Pour une capacité d'environ vingt plateaux, ce four consomme environ 10 Hw pour une élévation de température suffisante pour obtenir des aliments chauds à 75° Celsius. De plus, si l'employé ne réagit pas lors de la sonnerie, après dix minutes d'attente, la température du couvercle et des aliments s'égalisera et le phénomène de condensation se déclenche.

On connaît également, par le document US-A-3 590 727, un dispositif de remise en température des aliments disposés sur des plateaux individuels avec régénération intégrée. Ce dispositif, destiné essentiellement au transport aérien, comporte un réceptacle à au-moins un compartiment. Celui-ci présente à sa partie arrière deux conducteurs électriques verticaux 16. On engage dans ce compartiment un panier présentant sur ses deux côtés latéraux des glissières sur lesquelles sont glissés des bacs. Ces bacs comportent sur leurs côtés longitudinaux des barres conductrices faisant saillie à la partie arrière des bacs et coopérant avec les conducteurs électriques verticaux du compartiment. Chaque barre de chaque bac comporte des plots saillants coopérant avec des barres de contact électrique d'une certaine longueur des plateaux chauffants.

Toutefois, ce dispositif présente plusieurs inconvénients. En effet, il présente un grand nombre d'éléments qui doivent assurer la liaison électrique entre les conducteurs électriques verticaux du compartiment et les barres de contact électrique des plateaux. Il est certain que le grand nombre de ces éléments diminue la fiabilité du dispositif tout en augmentant son coût de revient. Par ailleurs, il est nécessaire de prévoir dans ce dispositif des moyens assurant deux contacts, le premier se situant entre les barres de contact électrique des plateaux et les plots saillants des barres conductrices des bacs et le second entre ces dernières et les conducteurs électriques verticaux du compartiment. Notamment, ce dernier contact n'est pas assuré d'une manière certaine car s'il existe le moindre jeu entre les plateaux et la porte, cette dernière n'exerce plus une poussée suffisante sur les bacs pour assurer le second contact.

La présente invention a pour but de remédier à ces inconvénients. L'invention telle qu'elle est caractérisée dans la partie caractérisante de la revendication 1.

Les avantages obtenus grâce à cette invention consistent essentiellement en ceci que ce dispositif est nettement plus fiable que les dispositifs connus en raison de sa simplicité, ce qui provoque une diminution du coût du dispositif. Par ailleurs, du fait que le poussoir est à rappel élastique, on assure toujours le contact entre les conducteurs électriques verticaux du compartiment et les contacts électriques du plateau.

L'invention est exposée ci-après plus en détail à l'aide de dessins représentant seulement un mode d'exécution.

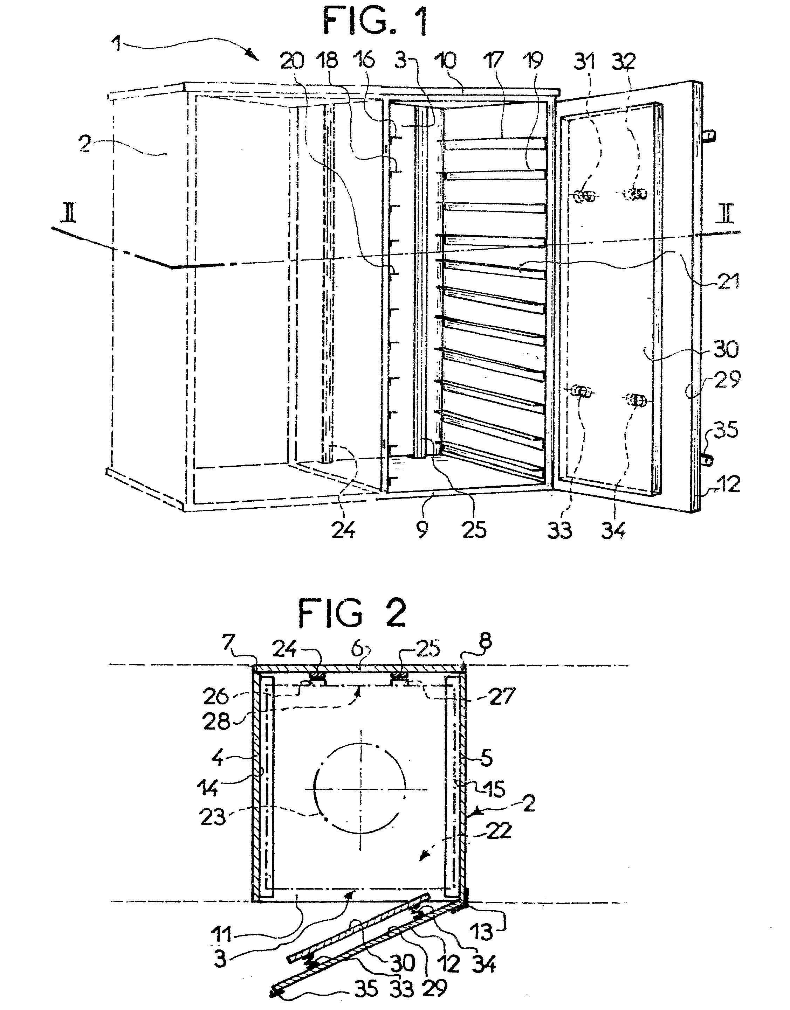

La figure 1 représente, en vue en perspective, le dispositif de remise en température des aliments conforme à l'invention.

La figure 2 représente, en vue en plan, selon le plan de coupe II-II de la figure 1, le dispositif.

On se réfère aux deux figures.

Le dispositif de remise en température des aliments 1 se compose essentiellement d'un réceptacle 2 présentant au moins un compartiment 3. Chaque compartiment 3 comporte, entre autres, deux parois latérales 4, 5 et un fond 6 placé verticalement et contre lequel viennent s'appuyer les chants arrière 7, 8 des deux parois latérales 4, 5. Cette ceinture composée des parois latérales 4, 5 et du fond 6 repose sur un plancher 9 et un dessus 10 obture la partie supérieure. Par ailleurs, l'ouverture avant 11 peut être obturée par une porte 12 pivotant autour d'un axe de rotation vertical 13.

Comme représenté, le réceptacle 2 est un meuble fixe mais il peut également être conçu sous la forme d'un chariot mobile. A cet effet il suffit de prévoir, à la partie inférieure, des roues, ce qui permet de déplacer le chariot mobile d'un endroit à un autre et, notamment depuis la cuisine collective jusqu'au lieu de distribution des aliments. Les faces internes 14, 15 des deux parois latérales 4, 5 comportent des glissières horizontales 16, 17, 18, 19 équidistantes, les faces supérieures 20, 21 des deux glissières se faisant face 16, 17 et 18, 19 étant situées sur un même plan horizontal. On dispose sur chaque paire de ces glissières 16 à 19 un plateau chauffant 22 présentant une plaque de diffusion de chaleur 23 sur laquelle est déposé l'aliment à régénérer.

Le fond 6 est pourvu de deux conducteurs électriques verticaux 24, 25 coopérant avec des contacts électriques 26, 27 faisant légèrement saillie par rapport au chant arrière 28 du plateau 22. Ces contacts électriques 26, 27 sont reliés à une résistance électrique dont est pourvue la plaque de diffusion de chaleur 23.

Pour assurer le contact entre les conducteurs électriques 24, 25 du fond 6 du compartiment 3 et les contacts électriques 26, 27 des plateaux chauffants 22, on pourvoit la face interne 29 de la porte 12 d'un poussoir isolant 30 monté sur des éléments élastiques 31, 32, 33, 34 tels que ressorts placés entre le poussoir 30 et ladite face 29 pour presser les plateaux 22 contre les conducteurs électriques 24, 25. Bien entendu, la porte 12 comporte des éléments de verrouillage 35 pour assurer aux ressorts un sens d'action dirigé vers l'intérieur du compartiment 3. Celui-ci est prévu pour un certain nombre de plateaux mais on peut également prévoir des compartiments pour deux ou trois plateaux. Dans ce cas, le dispositif 1 peut être de faibles encombrements et peut être fixé, par exemple, sur un des murs de la chambre du malade.

Par ailleurs, la porte 12 peut comporter des moyens de sécurité, à savoir que les conducteurs électriques 24, 25 ne sont sous tension que lorsque la porte 12 est non seulement fermée mais obligatoirement verrouillée.

Si le dispositif 1 est mobile et se présente sous la forme d'un chariot, il peut comporter un branchement par cordon téléphone.

**Revendications**

1. Dispositif de remise en température des aliments disposés sur des plateaux individuels (22) avec régénération intégrée présentant au moins une plaque de diffusion de chaleur (23) pourvue d'une résistance électrique composée, d'une part, d'un réceptacle (2) à au-moins un compartiment (3) dont les faces internes (14, 15) des parois latérales (4, 5) sont pourvues de glissières horizontales (17 à 19) et dont le fond (6) est pourvu de deux conducteurs électriques verticaux (24, 25) et, d'autre part, de plateaux individuels (22) pourvus de contacts électriques (26, 27), caractérisé en ce que le chant arrière (28) du plateau (22) comporte des contacts électriques (26, 27) légèrement saillants par rapport audit chant arrière (28) et prenant appui contre les deux conducteurs électriques verticaux (24, 25) du compartiment (3) par l'action, agissant sur l'ensemble des plateaux (22) lors de la fermeture de la porte (12), un poussoir isolant (30) situé sur la face interne (29) de la porte (12) est soumis à un rappel élastique par l'intermédiaire de ressorts (31 à 34) interposés entre ladite face interne (29) et le poussoir isolant (30).

2. Dispositif selon la revendication 1, caractérisé en ce que la mise sous tension des conducteurs électriques verticaux (24, 25) du compartiment (3) se fait lors du verrouillage de la porte (12).

**Claims**

1. Device for reheating food placed on individual trays (22) with integrated regeneration having at least one hotplate (23) fitted with an electrical resistance consisting, firstly, of a receptacle (2) with at least one compartment (3) in which the internal surfaces (14, 15) of the side walls (4, 5) are fitted with horizontal grooves (17 to 19) and the back (6) is fitted with two vertical electrical conductors (24, 25) ; and, secondly, of individual trays (22) fitted with electrical contacts (26, 27), characterised by the fact that the rear edge (28) of the tray (22) comprises electrical contacts (26, 27) projecting slightly from the said rear edge (28) which come to rest against the two vertical electrical conductors (24, 25) of the compartment (3) through the action, on all the trays (22) when the door (12) is closed, of an insulating pusher (30) located on the internal surface (29) of the door (12) which is subjected to a flexible drawback by means of springs (31 to 34) inset between the said internal surface (29) and the insulated pusher (30).

2. A device according to Claim 1, characterised by the fact that the switching on of the vertical electrical conductors (24, 25) of the compartment (3) takes place when the door (12) is bolted.

## Patentansprüche

1. Vorrichtung zum Aufwärmen von Nahrungsmitteln auf einzelnen Tabletts (22) mit einbezogener Reaktivierung, bestehend aus zumindest einer Wärmeverteilerplatte (23) mit einem elektrischen Widerstand, der einerseits ein Gehäuse (2) aus zumindest einem Fach (3), dessen innere Flächen (14, 15) der Seitenwände (4, 5) mit horizontalen Laufschienen (17 bis 19) und dessen Boden (6) mit zwei vertikalen elektrischen Leitern (24, 25) versehen sind, und der andererseits einzelne Tabletts (22) aufweist, die mit elektrischen Kontakten (26, 27) versehen sind, dadurch gekennzeichnet, daß die Hinterkante (28) des Tabletts (22) elektrische Kontakte (26, 27) aufweist, die gegenüber der Hinterkante (28) leicht überstehen und sich gegen die beiden senkrechten elektrischen Leiter (24, 25) des Fachs (3) bei Betätigung legen, indem bei Schließung der Tür (12) auf die Gesamtheit der Tabletts (22) eingewirkt wird, wobei ein isolierender Drücker (30), der auf der inneren Fläche (29) der Tür (12) angeordnet ist, mittels zwischen der inneren Fläche (29) und dem isolierenden Drücker (30) eingesetzten Federn (31 bis 34) einer federnden Rückstellkraft ausgesetzt ist.

2. Vorrichtung nach Anspruch 1, dadurch gekennzeichnet, daß die Unterspannungsetzung der vertikalen elektrischen Leiter (24, 25) des Fachs (3) bei der Verriegelung der Tür (12) bewirkt wird.

# FIG. 1

# FIG 2